(19) **Europäisches Patentamt**
**European Patent Office**
**Office européen des brevets**

(11) **EP 4 418 143 A1**

(12) # EUROPEAN PATENT APPLICATION

(43) Date of publication:
**21.08.2024 Bulletin 2024/34**

(21) Application number: **24155967.3**

(22) Date of filing: **06.02.2024**

(51) International Patent Classification (IPC):
***G06F 16/532*** (2019.01)

(52) Cooperative Patent Classification (CPC):
**G06F 16/532**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.02.2023 US 202363486009 P**
**18.08.2023 US 202318452424**

(71) Applicant: **Apple Inc.**
**Cupertino, CA 95014 (US)**

(72) Inventors:
 • **HUANG, Jia**
 **Mountain View (US)**

 • **MONARCH, Robert J.**
 **San Francisco (US)**
 • **KIM, Alex J.**
 **Mukilteo (US)**
 • **KWAC, Jungsuk**
 **Palo Alto (US)**
 • **KHURD, Parmeshwar**
 **San Jose (US)**
 • **THIYAGARAJAN, Kailash**
 **Dallas (US)**
 • **GU, Xiaoyuan**
 **San Jose (US)**

(74) Representative: **COPA Copenhagen Patents**
**Rosenørns Allé 1, 2nd floor**
**1970 Frederiksberg C (DK)**

(54) **AUTOMATIC IMAGE SELECTION WITH CROSS MODAL MATCHING**

(57) The present technology pertains to a multi-modal transformer model that is designed and trained to perform cross-modal tasks such as image-text matching, wherein the model is further refined with data for the particular downstream use case of the model. More specifically, the present technology can refine the underlying model with labeled examples derived from a dataset of text-image pairs that ultimately achieved a desired interaction in the proper context. For example, in the use case of advertising applications in an App store, the present technology can refine the underlying model with examples of images used to advertise applications in the App store where the respective invitational content was clicked or converted.

FIG. 1

**Description**

CROSS-REFERENCE TO RELATED APPLICATIONS

This application claims the benefit of priority to U.S. provisional application number 63/486,009, filed on February 20, 2023, which is expressly incorporated by reference herein in its entirety.

BACKGROUND

The task of determining the relevance of an image to input text is an important problem in various applications such as web search, image search, and advertisement recommendation. In the context of content creation, in many instances content creators can struggle to determine which image is the best match for a given phrase or set of words that will accompany an image. In some contexts, it might not be sufficient to merely select an image that is relevant to one or more keywords, in such contexts finding the most relevant image to match the keywords in a given context is desired.

BRIEF DESCRIPTION OF THE SEVERAL VIEWS OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depicts exemplary embodiments of the disclosure and are not therefore to be considered to be limiting of its scope, the principles herein are described and explained with additional specificity and detail through the use of the accompanying drawings in which:

FIG. 1 illustrates an example data pipeline in accordance with some aspects of the present technology.

FIG. 2 illustrates an example routine for identifying a relevance of an image to an input text where the image is contained within a collection of images in accordance with aspects of the present technology.

FIG. 3 illustrates an example architecture of the cross modal matching service in accordance with some aspects of the present technology.

FIG. 4 illustrates an example methodology for generating training sets used for training the cross-modal matching service to have improved relevance determinations in the context of generating or serving invitational content in accordance with aspects of the present technology.

FIG. 5 illustrates an example system configuration for the delivery of content, for example invitational content in accordance with aspects of the present technology.

FIG. 6 illustrates an example routine for configuring an advertising campaign using the present technology to identify relevant images for the advertised product relative to keywords for which the adverting campaign is configured to target in accordance with aspects of the present technology.

FIG. 7 7 illustrates an example routine for selecting, by the content delivery system, a most relevant image from a collection of images in an advertising campaign to serve based on input text in accordance with aspects of the present technology.

FIG. 8 illustrates an example of a deep learning neural network that can be used to implement a perception module and/or one or more validation modules, according to some aspects of the disclosed technology.

FIG. 9 illustrates an example lifecycle of a machine learning model in accordance with aspects of the present technology.

FIG. 10 shows an example of a computing system for implementing some aspects of the present technology.

DETAILED DESCRIPTION

The task of determining the relevance of an image to input text is an important problem in various applications such as web search, image search, and advertisement recommendation. Currently, there are various methods to address this problem, but they often suffer from limitations such as low accuracy and limited ability to handle complex relationships between images and text.

Current limitations in determining the relevance of an image to input text are applicable to human determinations and machine determinations. For example, while both machines and humans can determine that an image is relevant to input text with varying degrees of precision, it is a complex problem to consider the relevance of an image to input text in the context of a specific use case. This distinction can be illustrated by comparing the use case of image search to generate invitational content. In the use case of image search, a human or machine needs only to find images that are generically relevant to the input text. However, "generic relevance" is insufficient in the case of image selection for invitational content generation. In the case of image search for invitational content generation, a human or machine needs to find images that are both relevant to the input text, and good candidates to achieve the purpose of the invitational content.

The distinction between generic relevance and relevance for a given purpose can be illustrated from an example of invitational content for a coffee shop. Assume that the input text is "cappuccino." Generically relevant images can be a picture of a cappuccino, a coffee shop, a person drinking a cappuccino, an expresso, an expresso machine in a coffee shop. While in the generic sense, the most relevant picture for the input text "cappuccino" is probably the picture of a cappuccino, in the invitational content sense, the most relevant picture might be the expresso machine in a coffee shop because this image might suggest something about the expected quality of the coffee shop, the expected quality of a cappuccino made by that machine, and that the coffee shop sells cappuccinos.

The problem of relevance for a specific purpose can be even more pronounced in the context of matching a limited set of candidate images to keywords such as can occur in the context of advertising in a specific location. For example, when the location is an App store additional problems arise because the input text will include words that are not necessary descriptive of images, and the candidate images might also be limited. More specifically, when the input text is the name of an App like INSTAGRAM or TWITTER and the candidate images are unrelated to the App, the selection of the best image becomes a harder problem.

Accordingly, the present technology solves the challenges described above by using a multi-modal transformer model that is designed and trained to perform cross-modal tasks such as image-text matching, wherein the model is further refined with data for the particular downstream use case of the model. More specifically, the present technology can refine the underlying model with labeled examples derived from a dataset of text-image pairs that ultimately achieved a desired interaction in the proper context. For example, in the use case of advertising applications in an App store, the present technology can refine the underlying model with examples of images used to advertise applications in the App store where the respective invitational content was clicked or converted.

In some embodiments, the present technology provides a method for identifying the relevance of an image to input text, where the image is contained within a collection of images. The present technology can use a pre-trained LXMERT model that has been fine-tuned using positive training samples derived from observing invitational content containing images and/or images with text, that have been clicked on by users.

The present technology provides several advantages over existing methods for identifying the relevance of an image to input text. For example, the use of a fine-tuned model allows for a more accurate determination of image relevance compared to other methods. Additionally, the present technology can be tuned to the particular application for which the model is deployed which provides for greater performance of invitational content generated using the present technology when the invitational content is deployed in a downstream function - such as presentation of the invitational content as a promoted search result.

More specifically, the present technology can assist App developers to advertise in an App store by bidding on search terms. App developers can offer to pay (bid) an advertising service to serve an advertisement for their app alongside specified content or search results that are relevant to specified keywords. When the App developers bid is accepted, the Ad server can serve the advertisement.

Given the cost associated with generating invitational content and the cost associated with serving invitational content it is highly desirable to design invitational content that will retrieve good results. The present technology can help design effective invitational content by finding the most relevant App image to search terms to which the invitational content will be targeted. The present technology can be utilized when creating an invitational content campaign by suggesting the best image to an advertiser during invitational content creation. The advertiser may wish to generate invitational content to be presented to users to generate clicks, purchases, or overall interest. The invitational content may include one or more images, which may include, but are not limited to, drawings, screenshots, slogans, logos, photographs, and graphics. The present technology can be used to automatically recommend images that better align the advertised product with the keywords targeted by the invitational content campaign.

In addition to the benefits provided to advertisers, the present technology can provide benefits to an advertisement server. Signals from the model of the present technology can be added as features into advertisement prediction and ranking processes.

Additionally, the present technology can provide benefits to an App store because when high quality invitational content is recommended, there are improved user experiences, long-term improvement in business key performance indicators (KPIs).

As described herein, one aspect of the present technology is the gathering and use of data available from various sources to improve the creation of invitational content. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to deliver targeted content that is of greater interest to the user. Accordingly, use of such personal information data enables users to calculated control of the delivered content. Further, other uses for personal information data that benefit the user are also contemplated by the present disclosure.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services or anytime thereafter. In another example, users can select not to provide mood-associated data for targeted content delivery services. In yet another example, users can select to limit the length of time mood-associated data is maintained or entirely prohibit the development of a baseline mood profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

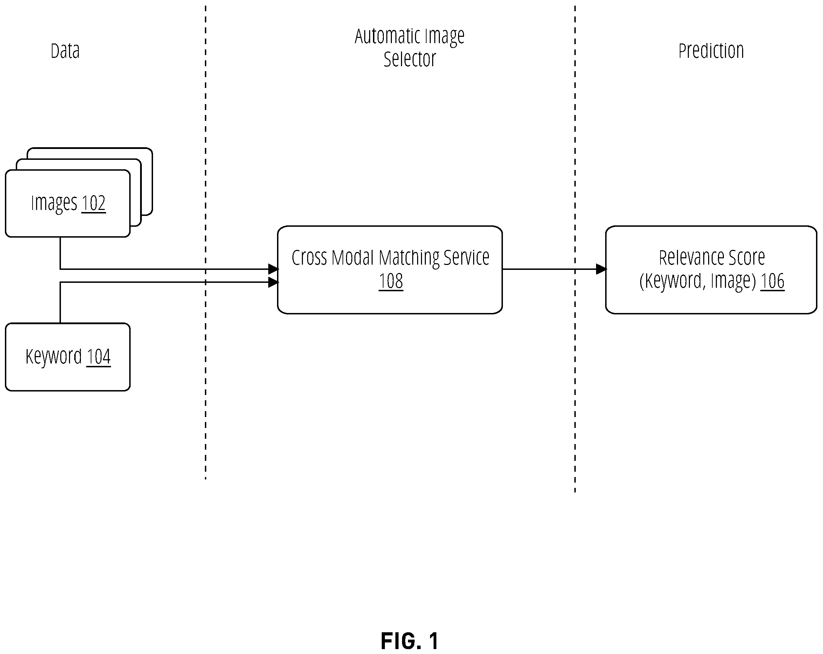

FIG. 1 illustrates an example data pipeline in accordance with some aspects of the present technology.

As illustrated in FIG. 1, data including a collection of images 102 and at least one keyword 104 can be provided to the cross modal matching service 108, which can output a prediction of the relevance of the respective images 102 to the at least one keyword 104.

For example, the collection of images 102 can be a collection of images associated with an App in an App Store for which an App developer desires to advertise the App when a user searches for the keywords 104 in the App Store such that when the keywords 104 are received by the App Store, the App is a promoted search result in response to the query based on the keywords. In such an example, the cross modal matching service 108 can identify the best images 102 from the collection of images 102 associated with the App to be associated with the keywords. In some embodiments, the cross modal matching service 108 can also output a confidence value or score that shows how relevant an image from the collection of images 102 is to the keywords. In some embodiments, a confidence value or score can indicate a probability that an item of invitational content (advertisement) will be interacted with on a receiving user terminal.

In another example, the collection of images 102 can be images from a plurality of items of invitational content for one or more Apps in an App Store and the keywords 104 can be either explicit keywords entered by a user searching the App Store or implicit keywords derived from a context in which there is an opportunity to serve the invitational content. The output of the cross modal matching service 108 can be used to select invitational content to serve.

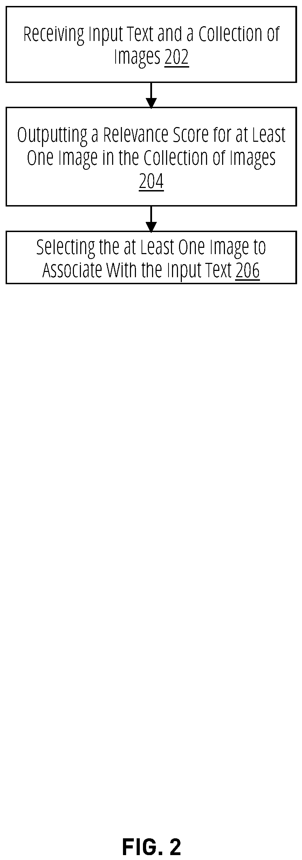

FIG. 2 illustrates an example routine for identifying a relevance of an image to an input text where the image is contained within a collection of images. Although the example routine depicts a particular sequence of operations, the sequence may be altered without departing from the scope of the present disclosure. For example, some of the operations depicted may be performed in parallel or in a different sequence that does not materially affect the function of the routine. FIG. 2 will be discussed in the context of the data pipeline of FIG. 1. In other examples, different components of an example device or system that implements the routine may perform functions at substantially the same time or in a specific sequence.

According to some examples, the method includes receiving input text and a collection of images at block 202. For example, the cross modal matching service 108 illustrated in FIG. 1 may receive input text and a collection of images.

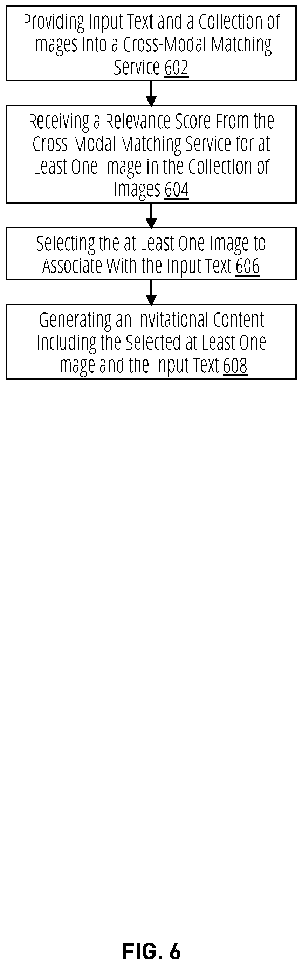

In some embodiments, and as will be addressed in more detail with respect to FIG. 6, the images 102 and the keywords 104 can be provided by one of the secondary content providers 518 that can use the cross modal matching service 108 as a tool for creating one or more items of invitational content including one or more images. For example, the secondary content provider 518 can utilize the cross modal matching service 108 to select an image to use in an item of invitational content where the item of invitational content will be served in response to an App store receiving a search query containing one or more keywords.

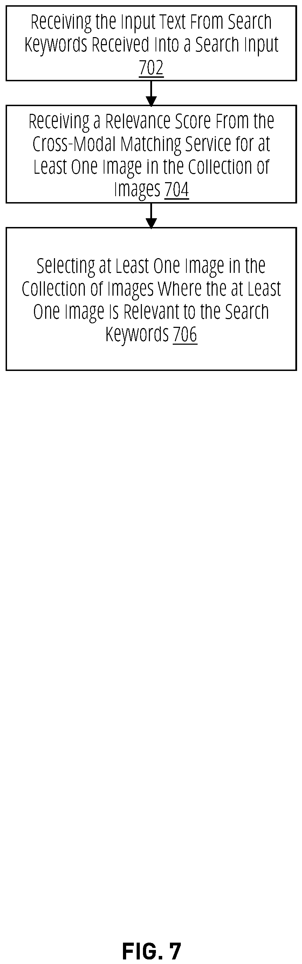

In some embodiments, and as will be addressed in more detail with respect to FIG. 7, the images 102 and the keywords 104 can be provided by a content delivery system 506 that utilizes the cross modal matching service 108 to select an item of invitational content to serve to a user terminal 502 in response to receiving a request for invitational content from a webpage or App. In this example use case, the content delivery system 506 can use the cross modal matching service 108 to help select a relevant item of invitational content to serve.

According to some examples, the method includes outputting a relevance score for at least one image in the collection of images 102 at block 204. For example, the cross modal matching service 108 illustrated in FIG. 1 may output a relevance score for images in the collection of images 102. The relevancy score indicates a relevance of the at least one image with respect to the input keyword 104.

In some embodiments, the cross-modal matching service includes a trained machine learning model, wherein the trained machine learning model was trained on a first dataset including pairings of images and text. The first dataset includes a positive example of relevance of a first training dataset image to first paired text when a desired interaction with respect to the first training dataset image and the first paired text has been observed. For example, when the first training dataset image and the first paired text occur in an item of invitational content or the invitational content was served in response to a first paired text provided as a keyword leading to the serving of the item of invitational content, the desired interaction can be a click or conversion of the item of invitational content. The positive examples of relevance are labeled training data representing positive associations of images and keywords.

The use of images that are not just generally relevant to keywords for training, but more specifically the use of images that are relevant to keywords in the context of serving invitational content that receives the desired interaction results in a fine-tuned model allows for a more accurate determination of image relevance in this domain compared to other methods. In some embodiments, the positive training set can be even more selective and includes items of invitational content that achieved the desired interaction when presented on with an App store interface that received the keywords as a search input.

In some embodiments, the first dataset also includes negative examples of relevance for a combination of a first training dataset image to paired text. The negative examples can be derived from remixing parings of keywords and images in items of invitational content where the keywords and images have been mixed up so as to provide combinations of keywords and images that were not intended to be associated. In some examples, the negative examples of relevance might be derived from remixed pairing of keywords and images from invitational content that have not achieved a solicited desired interaction, such as a click or conversion of the item of invitational content. The negative examples of relevance are labeled training data representing negative associations of images and keywords.

In some embodiments, the trained machine learning model was trained or evaluated on a second dataset including second pairings of images and text. The second dataset includes human labeled positive and negative examples of relevance of a second training dataset image to second paired text. In some aspects of the present technology, the second dataset can be combined with the first dataset for training of the machine learning model. In some aspects of the present technology, the second dataset can utilized for evaluating the success of training of the machine learning model.

According to some examples, the method includes selecting the at least one image to associate with the input text at block 206. In some embodiments, the selecting can be performed by a user creating an item of invitational content as part of secondary content provider 518 or by configuring a campaign with the content delivery system 506 whereby an item of invitational content should be served when specified keywords 104 are searched by a user. In some embodiments, the selecting can be performed by the content delivery system 506 when a webpage or App request an item of invitational content that is to be associated with one or more keywords.

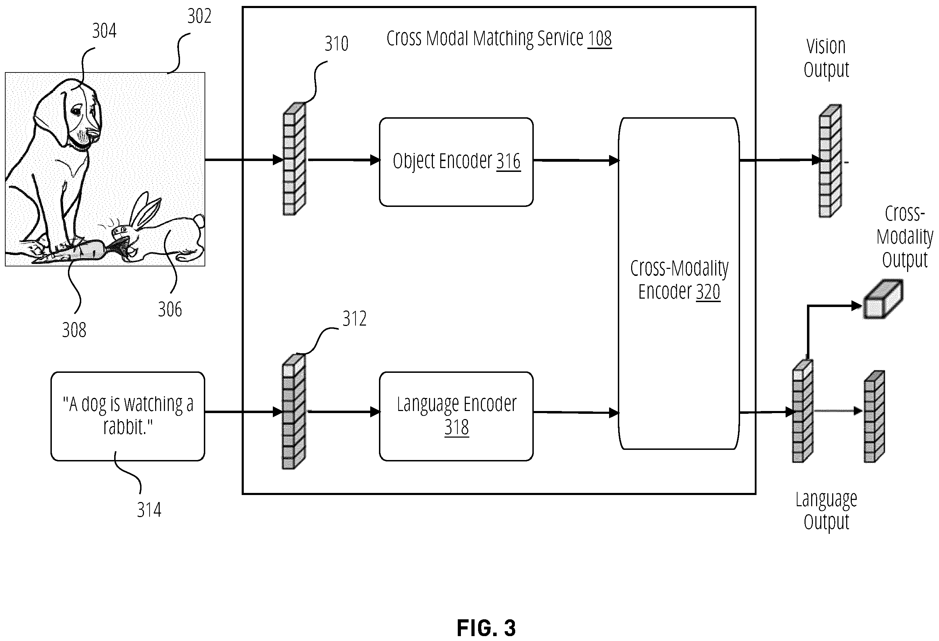

FIG. 3 illustrates an example architecture of the cross modal matching service in accordance with some aspects of the present technology.

The cross modal matching service 108 is configured to receive one or more images 302 and text 314. For example, image 302 includes a dog 304 looking at a rabbit 306 that has a carrot 308, and the text 314 says "A dog is watching a rabbit."

The cross modal matching service 108 includes an image embedding layer 310 wherein the image 302 is processed into one or more embeddings, and a language embedding layer 312 wherein the text 314 is processed into one or more embeddings. Embeddings are a way of representing data such as words, phrases, images, or any other categorical variables as dense vectors of continuous numbers. This is done so that the machine learning models can handle the input data efficiently. In NLP, for example, word embeddings capture the semantic meaning of a word by mapping it to a high-dimensional vector, where the proximity of the vectors reflects the similarity of the words. These vectors can then be used as input features for various NLP tasks, such as text classification or language translation. The idea is that the embeddings capture the underlying structure of the data in a compact and meaningful way, leading to improved model performance.

The input text 314 is converted to sentence embeddings, then a transformer-based Language Encoder 318 is applied. The input image 302 is embedded with object-level representations, then a transformer-based Object Relationship Encoder 316 is applied. Then, the Cross-Modality Encoder 320 learns joint cross-modality representations.

A Transformer is a type of deep learning architecture that is primarily used for natural language processing tasks, such as machine translation, text classification, and question answering. The Transformer architecture is based on self-attention mechanisms, which allow it to weigh the importance of different words in a sentence and make use of context information from a larger window of input tokens.

Cross modality encoding refers to the process of transforming data from one modality (e.g., text, audio, images) into a representation suitable for processing in another modality. For example, in computer vision, cross modality encoding can be used to represent an image in a form that can be easily processed by a language model. The goal is to extract the relevant information from one modality and use it to improve performance in another.

Typically, cross modality encoding is done using deep neural networks that learn to map data from one modality to another. For example, the present technology embedded an image into a high-dimensional feature vector, which is then further used to transform the image into a common space with the input text. The input text was also embedded into a high-dimensional feature vector, which is used to translate the input text into a common space with the input image. Once in the common space, the Cross-Modality Encoder 320 can measure the similarity between the two modalities.

In some embodiments, the cross modal matching service 108 can be derived from a LXMERT (Learning Cross-Modality Encoder Representations from Transformers) framework. LXMERT is a pre-trained deep learning model for tasks including transformation across domains. It is an extension of the Transformer architecture and is pre-trained on a large corpus of text data and image data.

Although the LXMERT framework maybe generically configured to understand relationships between images and text, the performance of the generic model can be improved, especially in view of the fact that relationships between images and text can be vary based on the use case for determining relevance. Accordingly, the present technology can provide additional training to predict relevance associations between images and input text for the use case of generating or serving invitational content.

Although the present technology is described as using the LXMERT framework as part of the cross-modal matching service, other frameworks can be used as well. For example, XLM-R can be used to encode keywords and this can be combined with ResNet or CLIP to embed images, or CLIP can be combined with a masked self-attention transformer to do the text encoding. In some embodiments, one or more frameworks can be combined with the LXMERT model too. For example, better results might be achieved by using CLIP to embed images before providing the images to LXMERT. In short, the present technology shouldn't be considered limited to a particular encoding model, although LXMERT was found to perform best in some experiments, unless otherwise specified in the appended claims.

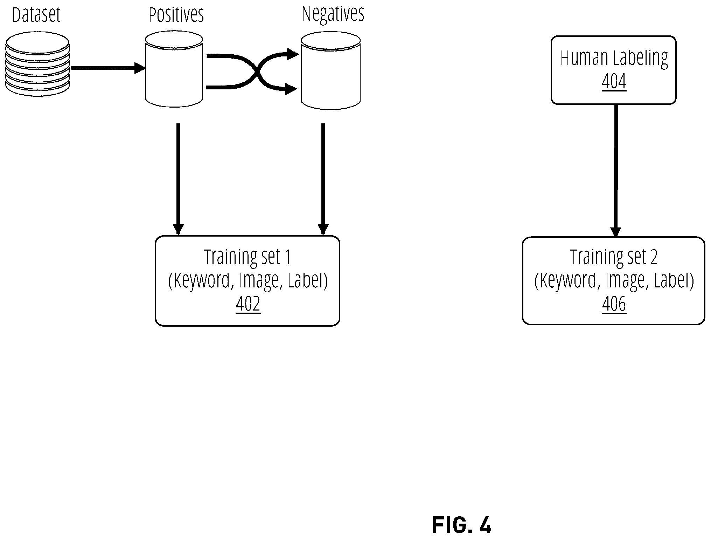

FIG. 4 illustrates an example methodology for generating training sets used for training the cross-modal matching service to have improved relevance determinations in the context of generating or serving invitational content.

The initial dataset can be a collection of pairings of text with images in items of invitational content.

In some embodiments, the text can be keywords, and the images can be from items of invitational content, where the keywords and invitational content are associated with an advertising campaign. A secondary content provider 518, such as an App developer, can configure an advertising campaign with the content delivery system 506 whereby items of invitational content can be associated with specified keywords. The content delivery system 506 can attempt to serve the invitational content when the content delivery system 506 receives a request for an item of invitational content that is associated with the keywords. The request can be associated with the keywords when a user searches for those keywords in a search engine, such as a search engine of an App store, or when a webpage or App requests an item of invitational content and that website or App is associated with the keywords or requests invitational content associated with the keywords.

In some embodiments, the text can be from a tag line or other text that is included in an item of invitational content, and the images can be from the invitational content including the tag line or other text.

The text and the images in the initial dataset can be received from the content delivery system 506 and pertain to items of invitational content that have been served to user terminals 502. The initial dataset can also include data regarding the performance of the invitational content, e.g., whether the invitational content was clicked or converted or not.

The initial dataset can be used to create sub-collections of positive and negative examples. The positive examples include items of invitational content that received a click or that led to a conversion. In some embodiments, the criteria for inclusion into the positive dataset can be varied to include clicks, or conversions, or some other criteria. The positive dataset is deemed to include examples of pairings of text and images that are relevant to each other. The relevance is implied from the fact that the invitational content was successful in inviting the click, conversion, or other criteria. For example, if a user searches for a dog and rabbit, and the content delivery system 506 returns an image that the user clicks on, it can be inferred that the image was relevant to the search since a user acted positively toward the search result (the item of invitational content served in response to the query). Note that the image might or might not actually include a dog and a rabbit, but the fact that the user clicked on the image indicates relevance of the image to the keywords.

The negative examples can be derived from remixing parings of keywords and images in items of invitational content that are in the initial dataset. The keywords and images have been mixed up from the pairings in the initial dataset so as to provide combinations of keywords and images that were not intended to be associated and were not presented together. Since there will likely be more examples of negatively labeled pairings, the negatively labeled pairs can be sampled to limit the number of negative examples compared to the positive examples, else the model trained form the training set might become biased towards finding pairings between words and images as not relevant.

The positive examples of relevance are labeled training data representing positive associations of images and keywords and the negative examples of relevance are labeled training data representing negative associations of images and keywords. Collectively, the positive examples and negative examples can make up Training set 1 402, which includes a triplet of a keyword, an image, and the positive or negative label.

A second training set can be generated by asking human reviewers to label 404 the relevance between each keyword and different images of the same advertised item. For example, when a secondary content provider 518 is configuring a campaign that will associate their content (e.g., App, or other content) with a collection of keywords, the content can be associated with several different candidate images. In some embodiments, these images can be derived from a custom page dedicated to the App. Human reviewers can be asked to label the relevance of all images for the advertised item relative to the keywords around which the campaign is configured. The Human Labeling 404 can results in positive and negative labels associated with keyword-image pairs.

In some aspects the cross modal matching service 108 utilizes a LXMERT model with nine language layers, five object relationship layers, and five cross-modality layers. The cross-modal matching service is fine-tuned from the pre-trained LXMERT model based on the training dataset consisting of (keyword, image, label) triplets.

The fine-tuning process can be defined as a sequential model built on top of a LXMERT Encoder, which consists of a linear layer, a GELU activation function, a layer normalization, another linear layer, and a sigmoid activation function as the last layer to output binary classification predictions. For example, if LXMERT(img, keyword) is the cross-modal representation, then the predicted matching probability is calculated by:

$$x = LXMERT(img, keyword)$$

$$z^0 = W_0(x) + b_0$$

$$z^1 = LayerNorm(GeLU(z^0))$$

$$prob = \sigma(W_1 z^1 + b_1)$$

where $\sigma$ is the sigmoid function. The model is trained for 6 epochs with a batch size of 256. The model is trained using an optimization function. in some examples, the optimization function is the Adam algorithm [Diederik P Kingma and Jimmy Ba. 2014. Adam: A method for stochastic optimization. arXiv preprint arXiv: 1412.6980 (2014).] The model can further be configured with a linear-decaying learning rate with a peak learning rate at 5e-5.

Content management service 110 may incorporate the output from cross modal matching service into the content packages. In some embodiments, the second dataset can be utilized for evaluating the success of training of the machine learning model.

In an example, the cross modal matching service 108 was trained on a dataset comprised of 5,000,000 labeled samples that were divided into 4,000,000 instances training data, 500,000 instances of validation data, and 500k instances of test data. Results showed training the cross modal matching service 108 using the samples labeled as positive based on the successful performance in inviting the click, conversion, or other criteria achieved 0.96 AUC and 0.89 F1 score. The cross modal matching service 108 of the present technology outperforming a generic model by 8% and 17% respectively owing to the fact that the training data was specific to data relevant to the use case of the cross modal matching service 108.

In some embodiments, the initial dataset can be repopulated with more recent data, and the Training set 1 402 and Training set 2 406 can be refreshed based on the more recent data. In this was, the model can be repeatedly trained, and thereby updated to both improve its relevance prediction, but also to accommodate changing definitions of relevance over time.

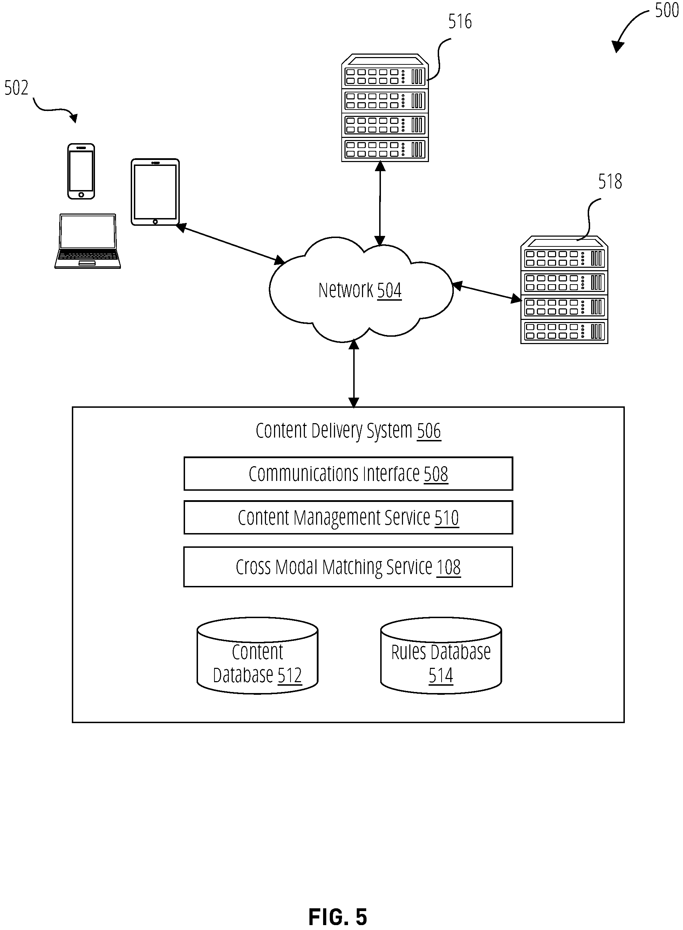

FIG. 5 illustrates an example system 500 configuration for the delivery of content, for example invitational content, wherein electronic devices communicate via a network for purposes of exchanging content and other data. The system can be configured for use on a wide area network such as that illustrated in FIG. 5. However, the present principles are applicable to a wide variety of network configurations that facilitate the intercommunication of electronic devices. For example, each of the components of system 100 in FIG. 5 can be implemented in a localized or distributed fashion in a network.

In system 100, invitational content can be delivered to user terminals 502 connected to a network 504 by direct and/or indirect communications with a content delivery system 506. User terminals 502 can be any network enabled client devices, such as desktop computers, mobile computers, handheld communications devices, e.g. mobile phones, smart phones, tablets, smart televisions, set-top boxes, and/or any other network enabled computing devices. Furthermore, content delivery system 506 can concurrently accept connections from and interact with multiple user terminals 502.

The content delivery system 506 can receive a request for electronic content, such as invitational content to be served with a web page, an application, a media item, etc., from one of user terminals 502. Thereafter, the content delivery system 506 can assemble a content package including the invitational content and transmit the assembled content page to the requesting one of user terminals 502. To facilitate communications with the user terminals 502 and/or any other device or component, the content delivery system 506 can include a communications interface 508.

The content delivery system 506 can include a content management service 510 to facilitate the generation of an assembled content package. For example, in the case of invitational content being served and presented with a web page , the content management service 510 can assemble a content package by requesting the data for the web page from one of the primary content providers 516 maintaining the web page. The invitational content can be sourced from one of the secondary content providers 518. The content management service 510 can request the appropriate invitational content based on the configuration of parameters that guide serving of the invitational content.

The content delivery system 106 may also include a cross modal matching service 108 (e.g., the cross modal matching system embodied in FIG. 3) to assist in the selection of invitational content to serve. When multiple candidate items of invitational content are configured to be served based on keywords or other attributes received from a user terminal 502, the content management service 110 may input key words or images extracted from the request from user terminal 502 to cross modal matching service. Cross modal matching service 108 may output rankings or a scoring of words, images, etc. making up items of invitational content associated with the candidate invitational content to assist the content management service 510 in selecting one of the candidate items of invitational content to serve.

In some configurations, the cross modal matching service might not be incorporated into the content delivery system 506 and may be a stand-alone service accessible by the secondary content providers 518 or the content delivery system 506. For example the cross modal matching service 108 can be a service used to create invitational content rather than to serve invitational content.

An assembled content package can include text, graphics, audio, video, executable code, or any combination thereof. Further, an assembled content package can include invitational content designed to inform or elicit a pre-defined response from the user. In some embodiments, the invitational content can be associated with a product or can directly or indirectly advertise a product. For example, the assembled content package can include one or more types of advertisements from one or more advertisers.

Additionally, the invitational content can be active invitational content. That is, invitational content that is designed to primarily elicit a pre-defined response from a user. For example, active invitational content can include one or more types of advertisements configured to be clicked upon, solicit information, or be converted by the user into a further action, such as a purchase or a download of the advertised item. However, invitational content can also be passive invitational content. That is invitational content that is designed to primarily inform the user, such as a video. In some cases, passive invitational content can include information that can lead or direct users to other invitational content including active invitational content.

Furthermore, the invitational content can be dynamic invitational content. That is invitational content that varies over time or that varies based on user interaction. For example, dynamic invitational content can include an interactive game. However, the various embodiments are not limited in this regard and the invitational content can include static invitational content that neither varies over time nor with user interaction. In the various embodiments, invitational content in a content package can be static or dynamic and active or passive. A content package can include a combination of various types of invitational content in a single content package.

Although primary content providers 516 and secondary content providers 518 are presented herein as separate entities, this is for illustrative purposes only. In some cases, the primary content providers 516 and secondary content providers 518 can be the same entity. Thus, a single entity can provide both the primary and the secondary content. In one example, an App developer can provide a first App that requests invitational content, and the App developer can create invitational content advertising a second App where the invitational content is presented with the first App.

The content management service 510 can be configured to request that content be sent directly from primary content providers 516 and secondary content providers 518. Alternatively, a cached arrangement can also be used to improve performance of the content delivery system 506 and improve overall user experience. That is, the content delivery system 506 can include a content database 512 for locally storing/caching content maintained by primary content providers 516 and secondary content providers 518. The data in the content database 512 can be refreshed or updated on a regular basis to ensure that the content in the content database 512 is up to date at the time of a request from a user terminal 502. However, in some cases, the content management service 510 can be configured to retrieve content directly from primary content providers 516, and secondary content providers 518 if the metadata associated with the data in the content database 512 appears to be outdated or corrupted.

As described above, content maintained by the primary content providers 516 and secondary content providers 518 can be combined according to a predefined arrangement between the two content providers, which can be embodied as a set of rules. In an arrangement where the content delivery system 506 assembles the content package from multiple content providers, the assembly rules can be stored in a rules database 514 in the content delivery system 506. The content management service 510 can be configured to assemble the content package for user terminals 502 based on these rules. The rules can specify how to select content from secondary content providers 518 and primary content providers 516 in response to a request from one of user terminals 502. For example, in the case of a web page maintained by one of primary content providers 516, the rules database 514 can specify rules for selecting one of the secondary content providers 518. The rules can also specify how to select specific content from the selected one of secondary content providers 518 to be combined with the content provided by one of primary content providers 516. In some cases, an item of primary content, such as an app or other media object, can have one or more associated attributes. For example, an app can have one or more associated genre attributes, e.g. travel, sports, education, etc. A rule can be based at least in part on the primary content attributes. Once assembled, the assembled content package can be sent to a requesting one of user terminals 502.

Additionally, rules for combining primary and secondary content can be based on user characteristics known about the user. In particular, in some cases, invitational content can be selected based on the characteristics of the requesting user(s). As used herein, the term "user characteristics" refers to the characteristics of a particular user associated with one or more of user terminals 502. User characteristics can include channel characteristics, demographic characteristics, behavioral characteristics, and spatial-temporal characteristics. Channel characteristics can define the specific delivery channel being used to deliver a content package to a user. For example, channel characteristics can include a type of electronic content, a type of device or user terminal, a carrier or network provider, or any other characteristic that defines a specific delivery channel for the content package. Spatial-temporal characteristics can define a location, a location zone, a date, a time, or any other characteristic that defines a geographic location and/or a time for delivery of the content package. Demographic characteristics can define characteristics of the users targeted by the content or associated with the content. For example, demographic characteristics can include age, income, ethnicity, gender, occupation, or any other user characteristics. Behavioral characteristics can define user behaviors for one or more different types of content, separately or in combination with any other user characteristics. That is, different behavioral characteristics may be associated with different channel, demographic, or spatial-temporal characteristics. User characteristics can also include characteristics descriptive of a user's state of mind including characteristics indicative of how likely a user is to click on or convert an item of invitational content if it were displayed to the user. User characteristics can be learned directly or derived indirectly from a variety of sources. In some embodiments, the user characteristic values can be collected from one or more databases. For example, if the user is registered with an online media service, such as the ITUNES store maintained by Apple Inc. of Cupertino, CA, the collected data could include the user's registration information. Such data can provide values for declared user characteristics. Furthermore, the content delivery system 506 can be configured to learn of or derive user characteristics from any number of other information sources. For example, in some configurations, the content delivery system 506 can derive or infer one or more user characteristic values from user characteristic values already known about the user.

FIG. 6 illustrates an example routine for configuring an advertising campaign using the present technology to identify relevant images for the advertised product relative to keywords for which the adverting campaign is configured to target. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

According to some examples, the method includes providing input text and a collection of images into a cross-modal matching service at block 602. In some embodiments, the input text includes one or more keywords which an advertising campaign is configured to target. The collection of images can include one or more images associated with a product that is the subject of the advertising campaign. In some examples, the images can be provided as candidates by the party configuring the advertising campaign. In some examples, the images can be extracted from a product page containing information and images used to market the product. In some examples, the images can be product images or screenshots. More specifically, the product can be an App or content item available in an online store. The keywords can be those that are expected to be entered into a search query within the online store.

According to some examples, the method includes receiving a relevance score from the cross-modal matching service for at least one image in the collection of images at block 604. For example, the cross modal matching service 108 can identify which images are the most relevant to the targeted keywords. In some embodiments, the relevance score may correlate to a predicted amount of clicks the associated invitational content may receive. The relevance score may vary according to image use cases.

In some embodiments, the relevance score does not necessarily imply semantic relevance such that the content of the images describes the meaning of the keywords. For example, if the keyword was "INSTAGRAM" and the App to be advertised was TWITTER, and image of a TWEET doesn't describe or even pertain to INSTAGRAM or a post within that App, but it might be considered strongly relevant in the context of the App Store.

According to some examples, the method includes selecting the at least one image to associate with the input text at block 606. The party configuring the advertising campaign, or a software service receiving the output of the cross modal matching service 108 can select one or more of the images that are considered most relevant to the keywords and configure the content delivery system 506 to deliver the most relevant image for the keywords. In some examples, a different image might be more relevant to a subset of the keywords, and in such instances the content delivery system 506 can be configured to serve a first image when it is most relevant to the entered keywords, and to serve a second image when it is most relevant to entered keywords.

According to some examples, the method includes generating invitational content including the selected at least one image and the input text, at block 608. The at least one image is the image from the collection of images that is most likely to result in the desired interaction when the at least one image is paired with the input text.

FIG. 7 illustrates an example routine for selecting, by the content delivery system, a most relevant image from a collection of images in an advertising campaign to serve based on input text. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

According to some examples, the method includes receiving the input text from search keywords received into a search input at block 702. For example, the content delivery system 506 can include a configured campaign wherein invitational content regarding a product is to be served in a specified context. In an example, the context can be that a specified search term or phrase is entered into a search field of an online store. In an example, the context can be that a website or App that is associated with a description or categories is requesting an item of invitational content.

According to some examples, the method includes receiving a relevance score from the cross modal matching service 108 for at least one image in the collection of images, where the relevance score is the relevance of one or more images in the collection to the search terms or description or categories associated with an invitational content request at block 704. The collection of images can all be associated with a product and included as options for the content delivery system 506 to serve as part of the campaign. In some embodiments, the relevance score may correlate to a predicted amount of clicks the associated invitational content may receive. The relevance score may vary according to image use cases.

According to some examples, the method includes selecting at least one image in the collection of images where the at least one image is relevant to the search keywords at block 706. For example, the content delivery system 506 can dynamically select the most relevant image associated with the campaign based on text associated with the request for invitational content received by the content delivery system 506.

Although the present description has referred to specific examples, such as those for the creation or serving of invitational content in an App Store, it should be appreciated by those of ordinary skill in the that the present technology is applicable to finding images that are relevant to input text in a variety of contexts. For example, the present technology can be used in the creation of creatives for a product or service. A creative is a broad term that can include images, figures, or specific text associated with a product (e.g., a good, service, or application) or with invitational content (e.g., an advertisement) associated with the product.

In another example, the present technology can be used in the context of other content stores such as music, video, books, document stores, or even websites in general.

As will be appreciated by those of ordinary skill in the art, the present technology can be particularly useful in identifying images relevant to text (or inputs of other modalities) especially when the relevance might include additional factors beyond semantic relevance derived from the meaning of the input.

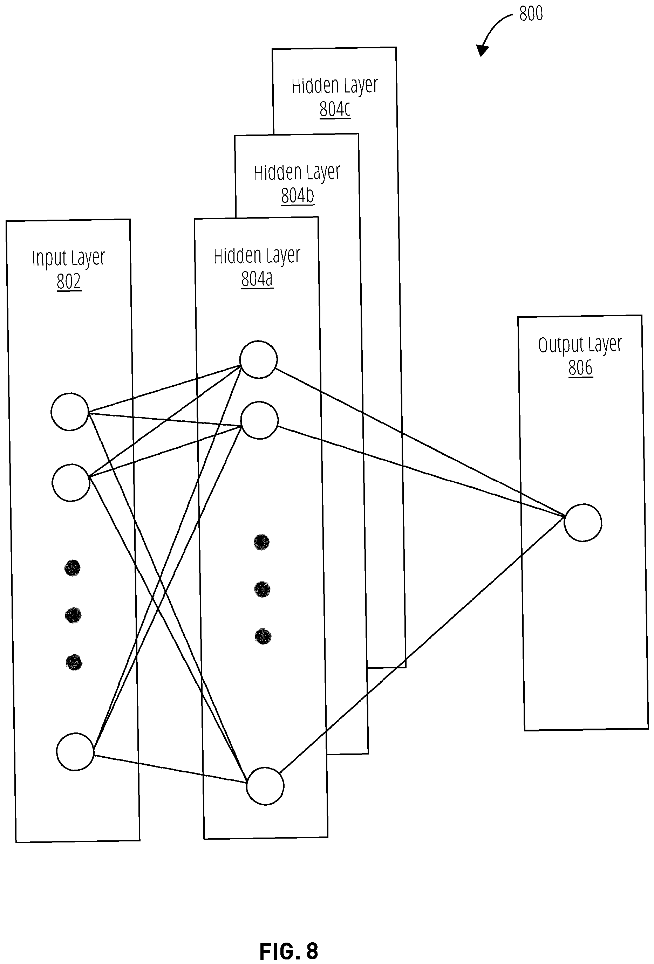

In FIG. 8, the disclosure now turns to a further discussion of models that can be used through the environments and techniques described herein. Specifically, FIG. 8 is an illustrative example of a deep learning neural network 800 that can be used to implement all or a portion of a perception module (or perception system) as discussed above. An input layer 802 can be configured to receive sensor data and/or data relating to an environment surrounding an AV. The neural network 800 includes multiple hidden layers 804a, 804b, through 804c. The hidden layers 804a through 804c include "n" number of hidden layers, where "n" is an integer greater than or equal to one. The number of hidden layers can be made to include as many layers as needed for the given application. The neural network 800 further includes an output layer 806 that provides an output resulting from the processing performed by the hidden layers 804a through 804c. In one illustrative example, the output layer 806 can provide estimated treatment parameters, that can be used/ingested by a differential simulator to estimate a patient treatment outcome.

The neural network 800 is a multi-layer neural network of interconnected nodes. Each node can represent a piece of information. Information associated with the nodes is shared among the different layers and each layer retains information as information is processed. In some cases, the neural network 800 can include a feed-forward network, in which case there are no feedback connections where outputs of the network are fed back into itself. In some cases, the neural network 800 can include a recurrent neural network, which can have loops that allow information to be carried across nodes while reading in input.

Information can be exchanged between nodes through node-to-node interconnections between the various layers. Nodes of the input layer 802 can activate a set of nodes in the first hidden layer 804a. For example, as shown, each of the input nodes of the input layer 802 is connected to each of the nodes of the first hidden layer 804a. The nodes of the first hidden layer 804a can transform the information of each input node by applying activation functions to the input node information. The information derived from the transformation can then be passed to and can activate the nodes of the next hidden layer 804b, which can perform their own designated functions. Example functions include convolutional, up-sampling, data transformation, and/or any other suitable functions. The output of the hidden layer 804b can then activate nodes of the next hidden layer, and so on. The output of the last hidden layer 804c can activate one or more nodes of the output layer 806, at which an output is provided. In some cases, while nodes in the neural network 800 are shown as having multiple output lines, a node can have a single output and all lines shown as being output from a node represent the same output value.

In some cases, each node or interconnection between nodes can have a weight that is a set of parameters derived from the training of the neural network 800. Once the neural network 800 is trained, it can be referred to as a trained neural network, which can be used to classify one or more activities. For example, an interconnection between nodes can represent a piece of information learned about the interconnected nodes. The interconnection can have a tunable numeric weight that can be tuned (e.g., based on a training dataset), allowing the neural network 800 to be adaptive to inputs and able to learn as more and more data is processed.

The neural network 800 is pre-trained to process the features from the data in the input layer 802 using the different hidden layers 804a through 804c in order to provide the output through the output layer 806.

In some cases, the neural network 800 can adjust the weights of the nodes using a training process called backpropagation. A backpropagation process can include a forward pass, a loss function, a backward pass, and a weight update. The forward pass, loss function, backward pass, and parameter/weight update is performed for one training iteration. The process can be repeated for a certain number of iterations for each set of training data until the neural network 800 is trained well enough so that the weights of the layers are accurately tuned.

To perform training, a loss function can be used to analyze error in the output. Any suitable loss function definition can be used, such as a Cross-Entropy loss. Another example of a loss function includes the mean squared error (MSE), defined as $E\_total = \Sigma(1/2 \, (target-output)^2)$. The loss can be set to be equal to the value of E_total.

The loss (or error) will be high for the initial training data since the actual values will be much different than the predicted output. The goal of training is to minimize the amount of loss so that the predicted output is the same as the training output. The neural network 800 can perform a backward pass by determining which inputs (weights) most contributed to the loss of the network, and can adjust the weights so that the loss decreases and is eventually minimized.

The neural network 800 can include any suitable deep network. One example includes a Convolutional Neural Network (CNN), which includes an input layer and an output layer, with multiple hidden layers between the input and out layers. The hidden layers of a CNN include a series of convolutional, nonlinear, pooling (for downsampling), and fully connected layers. The neural network 800 can include any other deep network other than a CNN, such as an autoencoder, Deep Belief Nets (DBNs), Recurrent Neural Networks (RNNs), among others.

As understood by those of skill in the art, machine-learning based classification techniques can vary depending on the desired implementation. For example, machine-learning classification schemes can utilize one or more of the following, alone or in combination: hidden Markov models; RNNs; CNNs; deep learning; Bayesian symbolic methods; Generative Adversarial Networks (GANs); support vector machines; image registration methods; and applicable rule-based systems. Where regression algorithms are used, they may include but are not limited to: a Stochastic Gradient Descent Regressor, a Passive Aggressive Regressor, etc.

Machine learning classification models can also be based on clustering algorithms (e.g., a Mini-batch K-means clustering algorithm), a recommendation algorithm (e.g., a Minwise Hashing algorithm, or Euclidean Locality-Sensitive Hashing (LSH) algorithm), and/or an anomaly detection algorithm, such as a local outlier factor. Additionally, machine-learning models can employ a dimensionality reduction approach, such as, one or more of: a Mini-batch Dictionary Learning algorithm, an incremental Principal Component Analysis (PCA) algorithm, a Latent Dirichlet Allocation algorithm, and/or a Mini-batch K-means algorithm, etc.

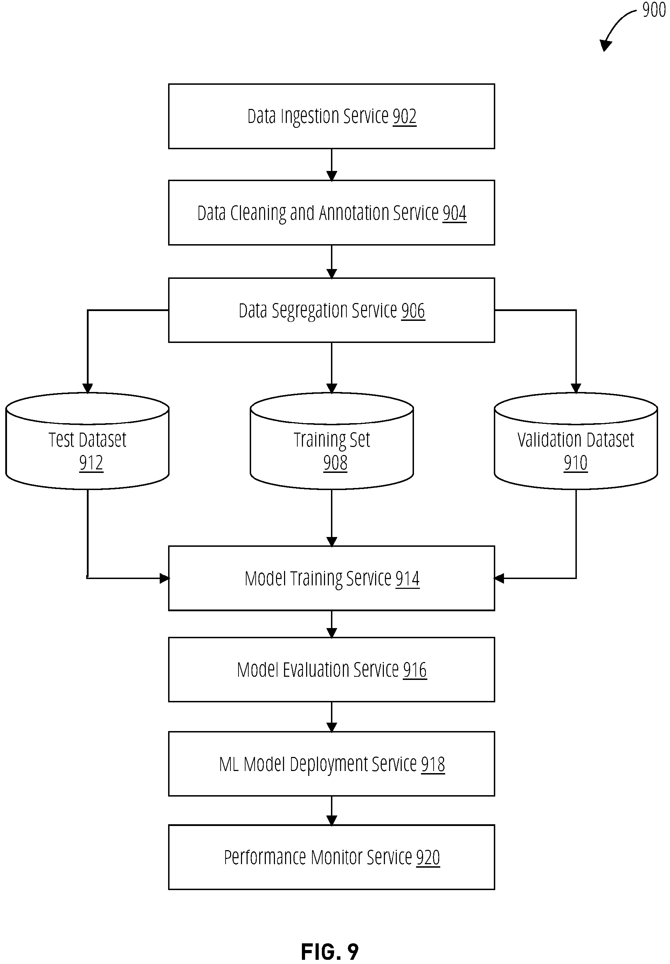

FIG. 9 illustrates an example lifecycle 900 of a ML model in accordance with some examples. The first stage of the lifecycle 900 of a ML model is a data ingestion service 902 to generate datasets described below. ML models require a significant amount of data for the various processes described in FIG. 9 and the data persisted without undertaking any transformation to have an immutable record of the original dataset. The data can be provided from third party sources such as publicly available dedicated datasets. The data ingestion service 902 provides a service that allows for efficient querying and end-to-end data lineage and traceability based on a dedicated pipeline for each dataset, data partitioning to take advantage of the multiple servers or cores, and spreading the data across multiple pipelines to reduce the overall time to reduce data retrieval functions.

In some cases, the data may be retrieved offline that decouples the producer of the data from the consumer of the data (e.g., an ML model training pipeline). For offline data production, when source data is available from the producer, the producer publishes a message and the data ingestion service 902 retrieves the data. In some examples, the data ingestion service 902 may be online and the data is streamed from the producer in real-time for storage in the data ingestion service 902.

After data ingestion service 902, a data preprocessing service preprocesses the data to prepare the data for use in the lifecycle 900 and includes at least data cleaning, data transformation, and data selection operations. The data cleaning and annotation service 904 removes irrelevant data (data cleaning) and general preprocessing to transform the data into a usable form. The data cleaning and annotation service 904 includes labelling of features relevant to the ML model. In some examples, the data cleaning and annotation service 904 may be a semi-supervised process performed by a ML to clean and annotate data that is complemented with manual operations such as labeling of error scenarios, identification of untrained features, etc.

After the data cleaning and annotation service 904, data segregation service 906 to separate data into at least a training set 908, a validation dataset 910, and a test dataset 912. Each of the training set 908, a validation dataset 910, and a test dataset 912 are distinct and do not include any common data to ensure that evaluation of the ML model is isolated from the training of the ML model.

The training set 908 is provided to a model training service 914 that uses a supervisor to perform the training, or the initial fitting of parameters (e.g., weights of connections between neurons in artificial neural networks) of the ML model. The model training service 914 trains the ML model based a gradient descent or stochastic gradient descent to fit the ML model based on an input vector (or scalar) and a corresponding output vector (or scalar).

After training, the ML model is evaluated at a model evaluation service 916 using data from the validation dataset 910 and different evaluators to tune the hyperparameters of the ML model. The predictive performance of the ML model is evaluated based on predictions on the validation dataset 910 and iteratively tunes the hyperparameters based on the different evaluators until a best fit for the ML model is identified. After the best fit is identified, the test dataset 912, or holdout data set, is used as a final check to perform an unbiased measurement on the performance of the final ML model by the model evaluation service 916. In some cases, the final dataset that is used for the final unbiased measurement can be referred to as the validation dataset and the dataset used for hyperparameter tuning can be referred to as the test dataset.

After the ML model has been evaluated by the model evaluation service 916, an ML model deployment service 918 can deploy the ML model into an application or a suitable device. The deployment can be into a further test environment such as a simulation environment, or into another controlled environment to further test the ML model.

After deployment by the ML model deployment service 918, a performance monitor service 920 monitors for performance of the ML model. In some cases, the performance monitor service 920 can also record additional transaction data that can be ingested via the data ingestion service 902 to provide further data, additional scenarios, and further enhance the training of ML models.

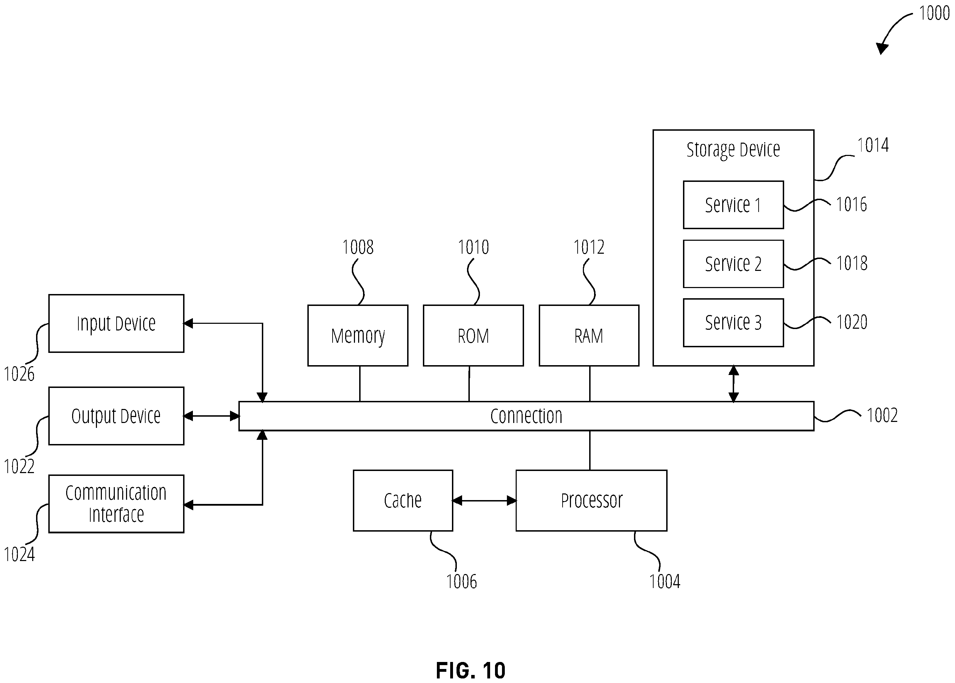

FIG. 10 shows an example of computing system 1000, which can be for example any computing device making up the content delivery system 506, cross modal matching service 108, or any component thereof in which the components of the system are in communication with each other using connection 1002. Connection 1002 can be a physical connection via a bus, or a direct connection into processor 1004, such as in a chipset architecture. Connection 1002 can also be a virtual connection, networked connection, or logical connection.

In some embodiments, computing system 1000 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example computing system 1000 includes at least one processing unit (CPU or processor) 1004 and connection 1002 that couples various system components including system memory 1008, such as read-only memory (ROM) 1010 and random access memory (RAM) 1012 to processor 1004. Computing system 1000 can include a cache of high-speed memory 1006 connected directly with, in close proximity to, or integrated as part of processor 1004.

Processor 1004 can include any general purpose processor and a hardware service or software service, such as services 1016, 1018, and 1020 stored in storage device 1014, configured to control processor 1004 as well as a special-purpose processor where software instructions are incorporated into the actual processor design. Processor 1004 may essentially be a completely self-contained computing system, containing multiple cores or processors, a bus, memory controller, cache, etc. A multi-core processor may be symmetric or asymmetric.

To enable user interaction, computing system 1000 includes an input device 1026, which can represent any number of input mechanisms, such as a microphone for speech, a touch-sensitive screen for gesture or graphical input, keyboard, mouse, motion input, speech, etc. Computing system 1000 can also include output device 1022, which can be one or more of a number of output mechanisms known to those of skill in the art. In some instances, multimodal systems can enable a user to provide multiple types of input/output to communicate with computing system 1000. Computing system 1000 can include communication interface 1024, which can generally govern and manage the user input and system output. There is no restriction on operating on any particular hardware arrangement, and therefore the basic features here may easily be substituted for improved hardware or firmware arrangements as they are developed.

Storage device 1014 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 1014 can include software services, servers, services, etc., that when the code that defines such software is executed by the processor 1004, it causes the system to perform a function. In some embodiments, a hardware service that performs a particular function can include the software component stored in a computer-readable medium in connection with the necessary hardware components, such as processor 1004, connection 1002, output device 1022, etc., to carry out the function.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Aspects of the present technology will be further understood from the following clauses:

Clause 1. A method comprising: providing input text and a collection of images into a cross-modal matching service; receiving a relevance score from the cross-modal matching service for at least one image in the collection of images, wherein the relevancy score indicates a relevance of the at least one image with respect to the input text; and selecting the at least one image to associate with the input text.

Clause 2. The method of clause 1, wherein the cross-modal matching service includes a trained machine learning model, wherein the trained machine learning model was trained on a first dataset including pairings of images and text, and the dataset includes a positive example of relevance of a first training dataset image to first paired text when a desired interaction with respect to the first training dataset image and the first paired text has been observed.

Clause 3. The method of any of clauses 1-2, wherein the first training dataset image and the first paired text occur with respect to an item of invitational content that was served to a user device by a content delivery system, and the desired interaction is a click or conversion of the item of invitational content on the user device.

Clause 4. The method of any of clauses 1-3, wherein the first training dataset image was presented in an item of invitational content and the first paired text was received in a search input of an App store.

Clause 5. The method of any of clauses 1-4, wherein the first dataset includes a negative example of relevance of the first training dataset image to paired text, wherein the negative example was derived from remixing a first image with text that was not associated with the first image.

Clause 6. The method of any of clauses 1-5, wherein the trained machine learning model was trained on a second dataset including second pairings of images and text, and the second dataset includes human labeled positive examples of relevance of a second training dataset image to second paired text, and human labeled negative examples of relevance of a third training dataset image to third paired text.

Clause 7. The method of any of clauses 1-6, wherein the selecting the at least one image to associate with the input text further comprises: generating invitational content including the at least one image and the input text, wherein the at least one image is a most relevant image to the input text in the collection of images, wherein the input text is a search term expected to be used in an App store, and the collection of images are images relevant to an App to be presented by the invitational content.

Clause 8. The method of any of clauses 1-7, wherein the at least one image is the image from the collection of images that is most likely to result in a desired interaction when the at least one image is included in the invitational content when it is served to a user terminal in response to the App store receiving the input text as the search term.

Clause 9. The method of any of clauses 1-8, wherein the providing input text and the collection of images into the cross-modal matching service includes receiving the input text from search keywords received into a search input; wherein the collection of images is included in respective items of invitational content; and wherein the selecting the at least one image to associate with the input text includes selecting at least one of the respective items of invitational content to be displayed in an App store along with search results that are relevant to the input text.

Clause 10. A system including a computer-readable medium having instructions stored thereon, the instructions being effective to configure the system to perform the method of any of clauses 1-9.

Further, exemplary methods, computer-readable storage media, systems, and electronic devices are set out in the following items:

1. A method comprising:

providing input text and a collection of images into a cross-modal matching service;
receiving a relevance score from the cross-modal matching service for at least one image in the collection of images, wherein the relevancy score indicates a relevance of the at least one image with respect to the input text; and
selecting the at least one image to associate with the input text.

2. The method of item 1, wherein the cross-modal matching service includes a trained machine learning model, wherein the trained machine learning model was trained on a first dataset including pairings of images and text, and the dataset includes a positive example of relevance of a first training dataset image to first paired text when a desired interaction with respect to the first training dataset image and the first paired text has been observed.

3. The method of item 2, wherein the first training dataset image and the first paired text occur with respect to an item of invitational content that was served to a user device by a content delivery system, and the desired interaction is a click or conversion of the item of invitational content on the user device.

4. The method of any of items 2-3, wherein the first training dataset image was presented in an item of invitational content and the first paired text was received in a search input of an App store.

5. The method of any of items 2-4, wherein the first dataset includes a negative example of relevance of a first training dataset image to paired text, wherein the negative example was derived from remixing a first image with text that was not associated with the first image.

6. The method of any of items 2-5, wherein the trained machine learning model was trained on a second dataset including second pairings of images and text, and the second dataset includes human labeled positive examples of relevance of a second training dataset image to second paired text, and human labeled negative examples of relevance of a third training dataset image to third paired text.

7. The method of any of items 1-6, wherein the selecting the at least one image to associate with the input text further comprises:
generating invitational content including the at least one image and the input text, wherein the at least one image is a most relevant image to the input text in the collection of images, wherein the input text is a search term expected to be used in an App store, and the collection of images are images relevant to an App to be presented by the invitational content.

8. The method of item 7, wherein the at least one image is the image from the collection of images that is most likely to result in a desired interaction when the at least one image is included in the invitational content when it is served to a user terminal in response to the App store receiving the input text as the search term.

9. The method of any of items 1-8, wherein the providing input text and the collection of images into the cross-modal matching service includes receiving the input text from search keywords received into a search input;

wherein the collection of images is included in respective items of invitational content; and
wherein the selecting the at least one image to associate with the input text includes selecting at least one of the respective items of invitational content to be displayed in an App store along with search results that are relevant to the input text.

10. A system comprising:

a processor; and
a memory storing instructions that, when executed by the processor, configure the system to:

provide input text and a collection of images into a cross-modal matching service;
receive a relevance score from the cross-modal matching service for at least one image in the collection of images, wherein the relevancy score indicates a relevance of the at least one image with respect to the input text; and
select the at least one image to associate with the input text.

11. The system of item 10, wherein the cross-modal matching service includes a trained machine learning model, wherein the trained machine learning model was trained on a first dataset including pairings of images and text, and the dataset includes a positive example of relevance of a first training dataset image to first paired text when a desired interaction with respect to the first training dataset image and the first paired text has been observed.

12. The system of item 11, wherein the first training dataset image and the first paired text occur with respect to an item of invitational content that was served to a user device by a content delivery system, and the desired interaction is a click or conversion of the item of invitational content on the user device.

13. The system of any of items 11-12, wherein the first training dataset image was presented in an item of invitational content and the first paired text was received in a search input of an App store.

14. The system of any of items 10-13, wherein the selecting the at least one image to associate with the input text further comprises:
generate invitational content including the at least one image and the input text, wherein the at least one image is a most relevant image to the input text in the collection of images, wherein the input text is a search term expected to be used in an App store, and the collection of images are images relevant to an App to be presented by the invitational content.

15. The system of any of items 10-14, wherein the providing input text and the collection of images into the cross-modal matching service includes receiving the input text from search keywords received into a search input;

wherein the collection of images is included in respective items of invitational content; and wherein the select the at least one image to associate with the input text includes selecting at least one of the respective items of invitational content to be displayed in an App store along with search results that are relevant to the input text.

16. A non-transitory computer-readable storage medium, the computer-readable storage medium including instructions that when executed by at least one processor, cause the at least one processor to:

provide input text and a collection of images into a cross-modal matching service;
receive a relevance score from the cross-modal matching service for at least one image in the collection of images, wherein the relevancy score indicates a relevance of the at least one image with respect to the input text; and
select the at least one image to associate with the input text.

17. The computer-readable storage medium of item 16, wherein the cross-modal matching service includes a trained machine learning model, wherein the trained machine learning model was trained on a first dataset including pairings of images and text, and the dataset includes a positive example of relevance of a first training dataset image to first paired text when a desired interaction with respect to the first training dataset image and the first paired text has been observed.

18. The computer-readable storage medium of item 17, wherein the first training dataset image was presented in an item of invitational content and the first paired text was received in a search input of an App store.

19. The computer-readable storage medium of any of items 16-18, wherein the selecting the at least one image to associate with the input text further comprises:
generate invitational content including the at least one image and the input text, wherein the at least one image is a most relevant image to the input text in the collection of images, wherein the input text is a search term expected to be used in an App store, and the collection of images are images relevant to an App to be presented by the invitational content.

20. The computer-readable storage medium of any of items 16-19, wherein the providing input text and the collection of images into the cross-modal matching service includes receiving the input text from search keywords received into a search input;

wherein the collection of images is included in respective items of invitational content; and wherein the select the at least one image to associate with the input text includes selecting at least one of the respective items of invitational content to be displayed in an App store along with search results that are relevant to the input text.

**Claims**

1.  A method comprising:

providing input text and a collection of images into a cross-modal matching service;
receiving a relevance score from the cross-modal matching service for at least one image in the collection of images, wherein the relevancy score indicates a relevance of the at least one image with respect to the input text; and
selecting the at least one image to associate with the input text.

2.  The method of claim 1, wherein the cross-modal matching service includes a trained machine learning model, wherein the trained machine learning model was trained on a first dataset including pairings of images and text, and the dataset includes a positive example of relevance of a first training dataset image to first paired text when a desired interaction with respect to the first training dataset image and the first paired text has been observed.

**3.** The method of claim 2, wherein the first training dataset image and the first paired text occur with respect to an item of invitational content that was served to a user device by a content delivery system, and the desired interaction is a click or conversion of the item of invitational content on the user device.

**4.** The method of any one of claims 2-3, wherein the first training dataset image was presented in an item of invitational content and the first paired text was received in a search input of an App store.

**5.** The method of any one of claims 2-4, wherein the first dataset includes a negative example of relevance of a first training dataset image to paired text, wherein the negative example was derived from remixing a first image with text that was not associated with the first image.

**6.** The method of any one of claims 2-5, wherein the trained machine learning model was trained on a second dataset including second pairings of images and text, and the second dataset includes human labeled positive examples of relevance of a second training dataset image to second paired text, and human labeled negative examples of relevance of a third training dataset image to third paired text.

**7.** The method of any one of claims 1-6, wherein the selecting the at least one image to associate with the input text further comprises: generating invitational content including the at least one image and the input text, wherein the at least one image is a most relevant image to the input text in the collection of images, wherein the input text is a search term expected to be used in an App store, and the collection of images are images relevant to an App to be presented by the invitational content.

**8.** The method of claim 7, wherein the at least one image is the image from the collection of images that is most likely to result in a desired interaction when the at least one image is included in the invitational content when it is served to a user terminal in response to the App store receiving the input text as the search term.

**9.** The method of any one of claims 1-8, wherein the providing input text and the collection of images into the cross-modal matching service includes receiving the input text from search keywords received into a search input;

wherein the collection of images is included in respective items of invitational content; and wherein the selecting the at least one image to associate with the input text includes selecting at least one of the respective items of invitational content to be displayed in an App store along with search results that are relevant to the input text.

**10.** A system comprising:

a processor; and
a memory storing instructions that, when executed by the processor, configure the system to perform the method of any one of claims 1-9.

**11.** A non-transitory computer-readable storage medium, the computer-readable storage medium including instructions that when executed by at least one processor, cause the at least one processor to perform the method of any one of claims 1-9.

Data

Automatic Image Selector

Prediction

Images 102

Keyword 104

Cross Modal Matching Service 108

Relevance Score (Keyword, Image) 106

**FIG. 1**

Receiving Input Text and a Collection of Images 202

↓

Outputting a Relevance Score for at Least One Image in the Collection of Images 204

↓

Selecting the at Least One Image to Associate With the Input Text 206

**FIG. 2**

FIG. 3

EP 4 418 143 A1

Dataset    Positives    Negatives

Human Labeling
404

Training set 1
(Keyword, Image, Label)
402

Training set 2
(Keyword, Image, Label)
406

**FIG. 4**

516

500

502

518

Network 504

**Content Delivery System 506**

Communications Interface 508

Content Management Service 510

Cross Modal Matching Service 108

Content Database 512

Rules Database 514

**FIG. 5**

```
┌─────────────────────────────────────┐
│   Providing Input Text and a         │
│   Collection of Images Into a        │
│   Cross-Modal Matching               │
│   Service 602                        │
└─────────────────────────────────────┘
                  │
                  ▼
┌─────────────────────────────────────┐
│   Receiving a Relevance Score        │
│   From the Cross-Modal Matching      │
│   Service for at Least One Image     │
│   in the Collection of               │
│   Images 604                         │
└─────────────────────────────────────┘
                  │
                  ▼
┌─────────────────────────────────────┐
│   Selecting the at Least One Image   │
│   to Associate With the Input        │
│   Text 606                           │
└─────────────────────────────────────┘
                  │
                  ▼
┌─────────────────────────────────────┐
│   Generating an Invitational         │
│   Content Including the Selected     │
│   at Least One Image and the         │
│   Input Text 608                     │
└─────────────────────────────────────┘
```

**FIG. 6**

Receiving the Input Text From Search
Keywords Received Into a Search Input
702

↓

Receiving a Relevance Score From the
Cross-Modal Matching Service for at
Least One Image in the Collection of
Images 704

↓

Selecting at Least One Image in the
Collection of Images Where the at Least
One Image Is Relevant to the Search
Keywords 706

**FIG. 7**

800

Input Layer
802

Hidden Layer
804a

Hidden Layer
804b

Hidden Layer
804c

Output Layer
806

**FIG. 8**

900

```
┌─────────────────────────────────────┐
│   Data Ingestion Service 902         │
└─────────────────────────────────────┘
                  │
                  ▼
┌─────────────────────────────────────┐
│ Data Cleaning and Annotation Service 904 │
└─────────────────────────────────────┘
                  │
                  ▼
┌─────────────────────────────────────┐
│   Data Segregation Service 906       │
└─────────────────────────────────────┘
```

Test Dataset
912

Training Set
908

Validation Dataset
910

Model Training Service 914

Model Evaluation Service 916

ML Model Deployment Service 918

Performance Monitor Service 920

**FIG. 9**

**FIG. 10**

EP 4 418 143 A1

**EUROPEAN SEARCH REPORT**

Application Number

EP 24 15 5967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Google Docs Add-On: How to Find Free Images to Insert in Your Document?", , 1 August 2021 (2021-08-01), XP093170519, Retrieved from the Internet: URL:https://www.youtube.com/watch?v=8Alh6L6-65I&t=1s * video and its description * | 1-11 | INV. G06F16/532 |
| A | US 11 521 018 B1 (BARZELAY ZOHAR [DE] ET AL) 6 December 2022 (2022-12-06) * figure 4B * | 1-11 | |

TECHNICAL FIELDS SEARCHED (IPC)

G06F

The present search report has been drawn up for all claims

| Place of search | Date of completion of the search | Examiner |
|---|---|---|
| The Hague | 5 June 2024 | Hackelbusch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 5967

05-06-2024

| Patent document cited in search report | | Publication date | Patent family member(s) | Publication date |
|---|---|---|---|---|
| US 11521018 | B1 | 06-12-2022 | NONE | |

**EP 4 418 143 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63486009